# EUROPÄISCHE PATENTSCHRIFT

(11) **EP 3 904 220 B1**
(45) Veröffentlichungstag und Bekanntmachung des Hinweises auf die Patenterteilung: **14.08.2024**
(21) Anmeldenummer: 20171813.7
(22) Anmeldetag: 28.04.2020
(51) Int. Cl.: H02K 7/14, H02K 1/02, B64G 1/24, H02K 44/00, H02K 7/00

(54) **VORRICHTUNG ZUR LAGEREGELUNG VON RAUMFAHRZEUGEN**
DEVICE FOR SPACECRAFT ATTITUDE CONTROL
DISPOSITIF DESTINÉ AU RÉGLAGE DE POSITION DES ENGINS SPATIAUX

(43) Veröffentlichungstag der Anmeldung: 03.11.2021
(73) Patentinhaber: Universität Stuttgart, 70174 Stuttgart (DE)
(72) Erfinder: Ehresmann, Manfred, 70439 Stuttgart (DE); Herdrich, Georg Heinrich, 73733 Esslingen (DE); Fasoulas, Stefanos, 72654 Neckartenzlingen (DE)
(74) Vertreter: Gagel, Roland

(56) Entgegenhaltungen:
- EP-A1- 0 131 061
- CN-A- 104 483 972
- DE-A1- 10 230 350
- DE-A1- 102009 036 327
- DE-A1- 102011 105 862
- JP-A- H03 281 496
- US-A- 3 906 415

## Beschreibung

### Technisches Anwendungsgebiet

Die vorliegende Erfindung betrifft eine Vorrichtung zur Lageregelung eines Raumfahrzeuges, die ein teilweise mit einem magnetisierbaren Fluid gefülltes Behältnis und eine Einrichtung zur Erzeugung wenigstens eines rotierenden Magnetfeldes aufweist, durch das das magnetisierbare Fluid in dem Behältnis in eine kontinuierliche Bewegung auf einer geschlossenen Bahn versetzt werden kann.

### Stand der Technik

Beim Betrieb von Raumfahrzeugen ist es häufig erforderlich, eine oder mehrere Vorrichtungen auf dem Raumfahrzeug vorzusehen, mit denen die Lage des Raumfahrzeugs gezielt verändert oder korrigiert werden kann. Dies kann bspw. über ein Antriebssystem des Raumfahrzeugs erfolgen, das durch einen exzentrischen Schub einen Drehimpuls erzeugt. Weiterhin ist es bekannt, Raumfahrzeuge mit mechanischen Drall- und Reaktionsrädern auszustatten. Hierbei wird in einem schnell rotierenden Schwungrad ein Drehimpuls gespeichert und bei Bedarf durch Beschleunigung oder Abbremsung des Schwungrades auf das Raumfahrzeug übertragen. Falls ein externes Magnetfeld wie das der Erde vorliegt, kann durch ein auf dem Raumfahrzeug selbst erzeugtes Magnetfeld ein reaktives Drehmoment generiert werden. Dies wird üblicherweise durch eine bestromte Spule erzeugt.

Mechanische Drall- und Reaktionsräder sind allerdings sehr teuer in der Herstellung, da sehr hohe Anforderungen an Toleranzen und Rundlaufeigenschaften vorliegen. Derartige mechanische Systeme können zudem leicht versagen und haben nur eine begrenzte Lebenszeit. Für die Erzeugung eines reaktiven Drehmomentes durch ein selbsterzeugtes Magnetfeld ist die Nähe eines Himmelskörpers mit relevantem Magnetfeld erforderlich. Die Effektivität ist hier außerdem von Position und Orbit des Raumfahrzeuges abhängig. Ein Antriebssystem zur Erzeugung des Drehimpulses verbraucht Treibstoff und ist daher nur begrenzt verfügbar. Durch die Treibstoffmasse werden zusätzlich die Startkosten des Raumfahrzeuges erhöht. Eine hochpräzise Lageregelung ist mit einem Antriebssystem oft nur eingeschränkt möglich.

In M. Ehresmann et al., "PAPELL: Mechanic-free Actuators through Ferrofluids", 12th IAA Symposium on Small Satellites for Earth Oberservation, Berlin, Mai 2019 ist eine Technik zur Erzeugung eines variablen Drehimpulses beschrieben, bei der ein Ferrofluid in einem kreisförmigen Rohr durch zwei Gruppen von jeweils vier Elektromagneten auf einer Kreisbahn bewegt wird. Die Elektromagneten sind hierbei als Topfmagneten ausgebildet, deren Spulenachse senkrecht zu der Bahnebene des bewegten Ferrofluids ausgerichtet sind. Die Magnete werden jeweils in geeigneter zeitlicher Reihenfolge an- und ausgeschaltet, um das Fluid auf der Kreisbahn zu bewegen. Das Ferrofluid wird bei dieser Ausgestaltung allerdings nur jeweils von einem Magneten zum nächsten transportiert und dort dann durch den Magneten wieder abgebremst, so dass kein ausreichend großer Drehimpuls erzeugt werden kann.

Die JP H03281496 A offenbart eine Vorrichtung zur Erzeugung eines variablen Drehimpulses gemäß dem Oberbegriff des Patentanspruches 1.

Aus der CN 104483972 B, der DE 10230350 A1, der DE 102009036327 A1 und der EP 0131061 A1 sind Vorrichtungen zur Erzeugung eines variablen Drehimpulses bekannt, die eine elektrisch leitfähige Flüssigkeit benötigen und nach dem Prinzip der Induktionspumpe unter Ausnutzung von Lorentzkräften arbeiten.

Die US 3 906 415 A beschreibt eine Vorrichtung, die elektrische Schaltfunktionen, elektrische Generatorfunktionen, elektrische Motorfunktionen und Pumpfunktionen ausführen soll. Die Vorrichtung umfasst ein Isolierrohr, in dem ein segmentierter Flüssigkeitsstrom aus einer Vielzahl aneinandergrenzender Segmente aus Quecksilber und Ferrofluid durch äußere Magnetfelder bewegt wird, die durch elektrische Spulen erzeugt werden.

Die Aufgabe der vorliegenden Erfindung besteht darin, eine Vorrichtung zur Lageregelung eines Raumfahrzeuges anzugeben, die ohne mechanische Komponenten, externe Magnetfelder oder zusätzlichen Treibstoff auskommt und die Erzeugung und Änderung eines ausreichend großen Drehimpulses oder Drehmomentes ermöglicht.

### Darstellung der Erfindung

Die Aufgabe wird mit der Vorrichtung gemäß Patentanspruch 1 gelöst. Vorteilhafte Ausgestaltungen der Vorrichtung sind Gegenstand der abhängigen Patentansprüche oder lassen sich der nachfolgenden Beschreibung sowie den Ausführungsbeispielen entnehmen.

Die vorgeschlagene Vorrichtung weist ein nur teilweise mit einem magnetisierbaren Fluid, insbesondere einem Ferrofluid, gefülltes Behältnis und eine Einrichtung zur Erzeugung eines oder mehrerer rotierender oder wandernder Magnetfelder auf, durch die das magnetisierbare Fluid in dem Behältnis in eine kontinuierliche Bewegung auf einer geschlossenen Bahn versetzt werden kann. Das verbleibende Innenvolumen des mit dem magnetisierbaren Fluid nur teilweise gefüllten Behältnisses ist entweder mit einem flüssigen Medium aufgefüllt ist, das eine höhere Dichte als das magnetisierbare Fluid aufweist und sich nicht mit dem magnetisierbaren Fluid mischt, oder das Behältnis ist so mit dem magnetisierbaren Fluid gefüllt, dass mehrere voneinander getrennte Teilvolumina des magnetisierbaren Fluids vorhanden sind. Die Einrichtung zur Erzeugung des einen oder der mehreren rotierenden oder wandernden Magnetfelder weist mehrere elektrische Spulen zur Erzeugung der Magnetfelder auf, deren Spulenachsen in der Bahnebene der geschlossenen Bewegungsbahn des magnetisierbaren Fluids liegen und jeweils senkrecht zu einem nächstkommenden Abschnitt der geschlossenen Bahn ausgerichtet sind. Die Einrichtung zur Erzeugung des einen oder der mehreren rotierenden oder wandernden Magnetfelder umfasst auch eine Steuereinrichtung, über die ein phasenversetzter Stromfluss durch die elektrischen Spulen erzeugt und gesteuert oder geregelt werden kann. Vorzugsweise ist die Steuereinrichtung dabei so ausgebildet, dass sie einen phasenversetzten sinusförmigen Stromfluss durch die Spulen erzeugen kann.

Durch die Anordnung der elektrischen Spulen lassen sich ein oder mehrere rotierende oder wandernde Magnetfelder erzeugen, durch das bzw. die die magnetisierbare Flüssigkeit im Behältnis magnetisiert und durch die Rotation oder Bewegung des oder der Magnetfelder kontinuierlich auf einer geschlossenen Bahn im Behältnis bewegt wird. Dadurch wird durch diese Flüssigkeit ein Drehimpuls erzeugt, dessen Stärke u.a. von der Bewegungsgeschwindigkeit des magnetisierbaren Fluids auf der geschlossenen Bahn abhängt. Durch Steuerung der Rotations- oder Bewegungsgeschwindigkeit des Magnetfeldes bzw. der Magnetfelder kann diese Bewegungsgeschwindigkeit und damit der Drehimpuls variiert und dadurch ein Drehmoment erzeugt werden. Der in dieser Vorrichtung erzeugte Drehimpuls überträgt dann einen umgekehrten Drehimpuls auf das Raumfahrzeug. Damit kann die Lage und Ausrichtung des Raumfahrzeuges im Raum gesteuert werden.

In einer vorteilhaften Ausgestaltung erstreckt sich das Behältnis um einen zentralen Bereich der Vorrichtung, wobei die elektrischen Spulen in dem zentralen Bereich angeordnet sind. Das Behältnis bildet hierbei vorzugsweise einen umlaufenden Kanal um den zentralen Bereich, bspw. einen ringförmigen oder ellipsenförmigen Kanal. Der Kanalquerschnitt kann dabei eine beliebige Form aufweisen, bspw. rechteckig oder kreisförmig.

In einer anderen Ausgestaltung befindet sich das Behältnis in dem zentralen Bereich und die Spulen sind um das Behältnis herum angeordnet. In beiden Fällen sind die Spulenachsen jeweils senkrecht zum nächstkommenden Abschnitt der geschlossenen Bahn ausgerichtet, auf der sich das magnetisierbare Fluid bewegen soll. Im Falle eines Behältnisses, das einen ringförmigen Kanal um den zentralen Bereich bildet, sind die Spulenachsen daher sternförmig im zentralen Bereich angeordnet.

In einer weiteren Ausgestaltung befindet ist nur ein Teil des Behältnisses von Spulen zur aktiven Bewegung von Ferrofluid umgeben. An anderen Abschnitten des Behältnisses befinden sich keine Spulen oder Spulenpaare. Die Bewegung hier wird nur durch Impulsübertrag innerhalb der Medien bzw. Flüssigkeiten erreicht.

Das durch die nur teilweise Füllung mit dem magnetisierbaren Fluid verbleibende Innenvolumen des Behältnisses ist in einer Alternative der vorgeschlagenen Vorrichtung mit einem flüssigen Medium aufgefüllt, das eine höhere Dichte als das magnetisierbare Fluid aufweist und sich nicht mit diesem mischt. Dieses flüssige Medium wird durch die Bewegung des magnetisierbaren Fluids ebenfalls auf der geschlossenen Bahn bewegt und erhöht dadurch den Drehimpuls. Vorzugsweise wird hierbei als flüssiges Medium ein bei Raumtemperatur (20° C) flüssiges metallisches Material mit einer Dichte von ≥ 6 g·cm-³ verwendet. Besonders vorteilhaft lässt sich hierbei Quecksilber oder eine als Galinstan bekannte eutektische Legierung aus Gallium und Indium oder aus Gallium, Indium und Zinn einsetzen. Als magnetisierbares Fluid wird vorzugsweise ein Ferrofluid eingesetzt.

In einer anderen Alternative der vorgeschlagenen Vorrichtung ist das Behältnis so mit dem magnetisierbaren Fluid gefüllt, dass mehrere durch ein flüssiges oder gasförmiges Medium voneinander getrennte Teilvolumina des magnetisierbaren Fluids vorhanden sind, die getrennt voneinander auf der geschlossenen Bahn umlaufen. Die Steuerung der Einrichtung zur Erzeugung eines oder mehrerer rotierender oder wandernder Magnetfelder ist dabei vorzugsweise so angepasst, dass alle diese Teilvolumina durch Magnetfelder entsprechend angetrieben werden.

Die einzelnen Spulen können geeignete Kernmaterialien zur Erhöhung der magnetischen Feldstärken, wie bspw. Eisenkerne, aufweisen. Weiterhin kann die Vorrichtung auch einen magnetischen Schild zur Abschirmung des Außenbereichs von den erzeugten Magnetfeldern aufweisen. Mit der vorgeschlagenen Vorrichtung wird durch die magnetische Bewegung der magnetisierbaren Flüssigkeit auf einer geschlossenen Bahn ein Drehimpuls gespeichert. Durch gezielte Änderung der Flüssigkeitsgeschwindigkeit über die Einrichtung zur Erzeugung des einen oder der mehreren rotierenden oder wandernden Magnetfelder wird der gespeicherte Drehimpuls geändert und damit auch der auf das Raumfahrzeug übertragene Drehimpuls. Auch eine Umkehrung des Drehimpulses um 180° durch Umkehrung der Rotations- oder Bewegungsrichtung des Magnetfeldes bzw. der Magnetfelder ist möglich. Damit können mit der vorgeschlagenen Vorrichtung Lageregelungsaufgaben eines Raumfahrzeuges ohne mechanische Komponenten oder externe Magnetfelder auf einfache, zuverlässige und kostengünstige Art und Weise realisiert werden. Die Vorrichtung erfordert keine mechanisch bewegten Komponenten und hat daher im Vergleich zu mechanischen Lösungen einen deutlich geringeren Verschleiß und eine höhere Lebenszeit und Zuverlässigkeit.

### Kurze Beschreibung der Zeichnungen

Die vorgeschlagene Vorrichtung wird nachfolgend anhand von Ausführungsbeispielen in Verbindung mit den Zeichnungen nochmals beispielhaft näher erläutert. Hierbei zeigen:
- Fig. 1: einen beispielhaften Aufbau der vorgeschlagenen Vorrichtung sowie drei Phasen der Bewegung des magnetisierbaren Fluids;
- Fig. 2: in schematischer Darstellung ein weiteres Beispiel für einen Aufbau der vorgeschlagenen Vorrichtung;
- Fig. 3: in schematischer Darstellung ein weiteres Beispiel für einen Aufbau der vorgeschlagenen Vorrichtung; und
- Fig. 4: in schematischer Darstellung ein weiteres Beispiel für einen Aufbau der vorgeschlagenen Vorrichtung.

### Wege zur Ausführung der Erfindung

Das Prinzip der vorgeschlagenen Vorrichtung beruht darauf, dass eine magnetisierbare Flüssigkeit durch lokal ausreichend starke magnetische Felder magnetisiert und durch diese Magnetfelder angezogen wird. Durch gezielte Verschiebung der Positionen hoher Magnetfeldstärke kann die magnetisierte Flüssigkeit entsprechend bewegt werden. Bei der vorgeschlagenen Vorrichtung werden nun ein oder mehrere rotierende oder wandernde Magnetfelder genutzt, um die magnetisierbare Flüssigkeit in eine kontinuierliche Bewegung auf einer geschlossenen Bahn zu versetzen und dadurch einen Drehimpuls zu erzeugen. Dies wird durch geeignete Anordnung und Ansteuerung elektrischer Spulen erreicht, deren Spulenachsen in der Bahnebene liegen.

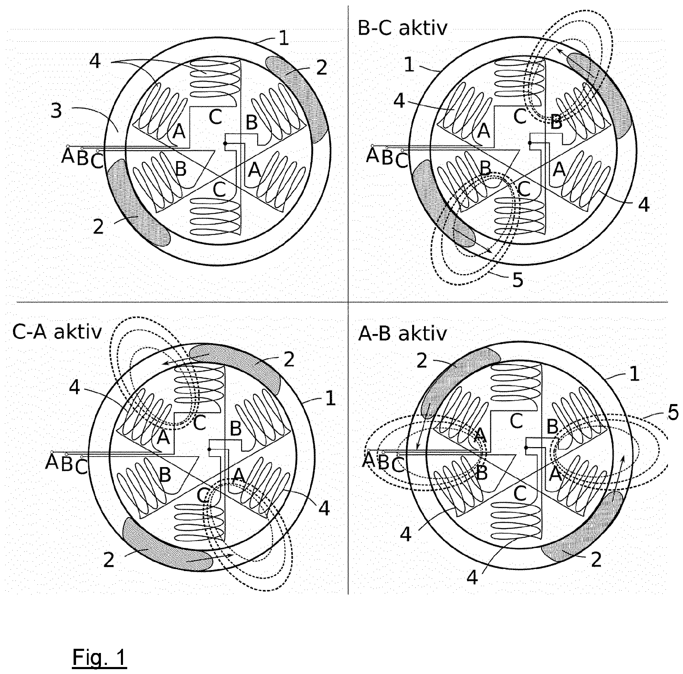

In Figur 1 ist im Querschnitt ein erstes Beispiel für den Aufbau der vorgeschlagenen Vorrichtung dargestellt. Figur 1a zeigt hierbei ein ringförmig ausgeführtes Behältnis 1, das einen geschlossenen Kanal um den zentralen Bereich der Vorrichtung bildet und mit einem Ferrofluid 2 teilweise gefüllt ist. In diesem Beispiel ist das Behältnis 1 so mit dem Ferrofluid 2 gefüllt, dass zwei voneinander getrennte Teilvolumina des Ferrofluids vorliegen, die durch ein flüssiges oder gasförmiges Medium 3 voneinander getrennt sind. Das ringförmige Behältnis 1 umschließt einen zentralen Bereich, in dem sechs Spulen 4 mit ihren Achsen sternförmig angeordnet sind, wie dies aus der Figur 1a ersichtlich ist. Jeweils zwei gegenüberliegende Spulen 4 bilden ein miteinander verbundenes Spulenpaar. Die jeweiligen offenen ersten Enden A, B, C der Spulenpaare können über eine nicht dargestellte Steuereinrichtung unter Spannung gesetzt werden, so dass ein Strom durch die jeweiligen Spulenpaare fließt. Die zweiten Enden sind dabei mit einem gemeinsamen Masseanschluss verbunden. Durch geeignete phasenversetzte Ansteuerung der einzelnen Spulenpaare mittels der Steuereinrichtung lassen sich zwei rotierende Magnetfelder 5 erzeugen, durch die jedes der beiden Teilvolumina des Ferrofluids 2 auf einer durch das Behältnis 1 vorgegebenen ringförmigen Bahn bewegt wird. Die Spulenachsen der Spulen 4 liegen hierbei alle innerhalb der Bahnebene dieser Bahn.

Die Erzeugung der rotierenden Magnetfelder und daraus resultierende Bewegung des Ferrofluids wird anhand der Figuren 1b - 1d veranschaulicht. So werden in Figur 1b zunächst die Enden B und C durch die Steuereinrichtung unter Spannung gesetzt. Durch den damit erzeugten Stromfluss in den entsprechenden Spulenpaaren bilden sich die in der Figur dargestellten Magnetfelder 5 aus. Dadurch fließt jedes der beiden Teilvolumina des Ferrofluids 2 in Richtung des jeweiligen Magnetfelds 5, wie dies in der Figur durch die Pfeile angedeutet ist. Da dieser Prozess symmetrisch stattfindet, wird ein Drehimpuls im System gespeichert und ein Drehmoment ausgeübt. Damit wird eine Lageregelung eines Raumfahrzeugs realisiert, in dem diese Vorrichtung eingesetzt wird. Die Figuren 1c und 1d zeigen die Fortsetzung dieses Vorgangs durch Anlegen der Spannung an die Enden C und A bzw. A und B. Die jeweils dadurch erzeugten Magnetfelder 5 und Bewegungen des Ferrofluids 2 sind wiederum in den Figuren dargestellt. Die Ansteuerung der einzelnen Spulenpaare der Vorrichtung durch die Steuereinrichtung erfolgt dabei vorzugsweise derart, dass eine kontinuierliche und gleichmäßige Rotation der Magnetfelder 5 erhalten wird. Hierzu wird durch die Steuereinrichtung vorzugsweise ein sinusförmiger Mehrphasenwechselstrom, im vorliegenden Beispiel mit drei Spulenpaaren ein Dreiphasenwechselstrom, erzeugt.

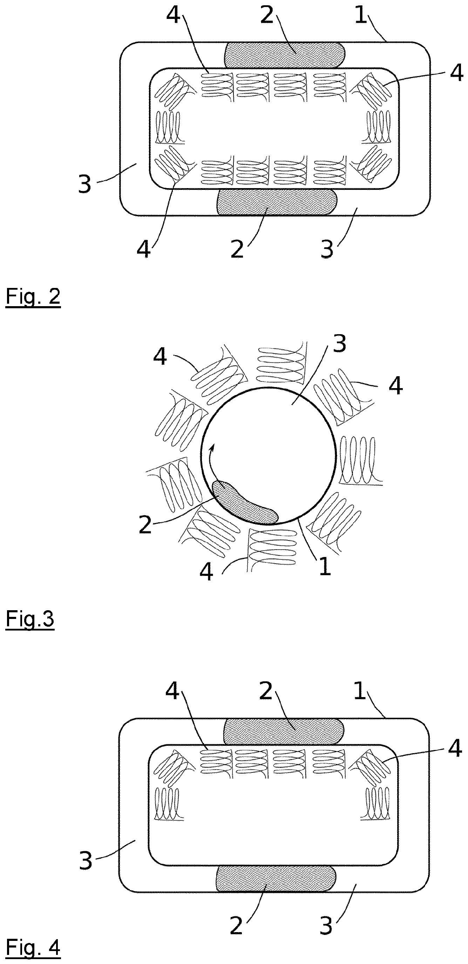

Die Anzahl der elektrischen Spulen bzw. Spulengruppen ist nicht auf die in Figur 1 dargestellte Menge beschränkt. Vielmehr können auch mehr als zwei Spulen pro Gruppe oder auch mehr als drei Gruppen von Spulen eingesetzt werden. Auch eine Gruppenbildung ist nicht in jedem Falle erforderlich. Die einzelnen Spulen können auch einzeln unabhängig voneinander angesteuert werden. Je nach Aufteilung des Ferrofluids kann diese unabhängige Ansteuerung auch erforderlich sein. Weiterhin ist es selbstverständlich auch möglich, das Behältnis 1 nicht ringförmig sondern in einer anderen Form auszugestalten, wie dies beispielhaft schematisch in Figur 2 angedeutet ist. In dieser Figur bildet das Behältnis 1 wiederum einen Kanal um einen zentralen Bereich, in dem die einzelnen Spulen 4 geeignet zur Erzeugung von zwei rotierenden Magnetfeldern angeordnet sind.

Auch eine Anordnung der Spulen 4 um das Behältnis 1 herum ist möglich, wie dies schematisch anhand eines Beispiels in Figur 3 angedeutet ist. Das Behältnis 1 ist in diesem Falle bspw. scheibenförmig in einem zentralen Bereich der Vorrichtung ausgebildet, wobei in diesem Beispiel die Spulen 4 mit ihren Spulenachsen sternförmig um das Behältnis 1 herum angeordnet sind. Auch in diesem Beispiel lässt sich das Ferrofluid 2 durch ein rotierendes Magnetfeld auf einer geschlossenen Bahn bewegen.

Die Spulen 4 müssen nicht vollständig um das Behältnis 1 herum bzw. entlang der geschlossenen Bahn angeordnet sein. Dies ist bespielhaft in Figur 4 als Modifikation der Ausgestaltung der Figur 3 dargestellt, lässt sich aber natürlich auch auf andere Ausgestaltungen, wie bspw. die der Figur 1 oder der Figur 2, übertragen. Die Bewegung des Ferrofluids 2 im Bahnbereich ohne Spulen erfolgt dabei durch Impulsübertrag innerhalb der Medien 2, 3 im Behältnis 1.

### Bezugszeichenliste

- 1: Behältnis
- 2: Ferrofluid
- 3: flüssiges oder gasförmiges Medium
- 4: Spule
- 5: Magnetfeld
- A, B, C: Enden der Spulen

## Patentansprüche

1. Vorrichtung zur Lageregelung eines Raumfahrzeuges, die
- ein teilweise mit einem magnetisierbaren Fluid (2) gefülltes Behältnis (1) und
- eine Einrichtung zur Erzeugung wenigstens eines rotierenden oder wandernden Magnetfeldes aufweist, durch das das magnetisierbare Fluid (2) in dem Behältnis (1) magnetisiert und durch die Rotation oder Bewegung des wenigstens einen Magnetfeldes in eine kontinuierliche Bewegung auf einer geschlossenen Bahn in einer Bahnebene versetzt werden kann,
wobei die Einrichtung zur Erzeugung wenigstens eines rotierenden oder wandernden Magnetfeldes mehrere elektrische Spulen (4) zur Erzeugung des Magnetfeldes, deren Spulenachsen in der Bahnebene liegen und jeweils senkrecht zu einem nächstkommenden Abschnitt der geschlossenen Bahn ausgerichtet sind, und
eine Steuereinrichtung aufweist, über die ein phasenversetzter Stromfluss durch die elektrischen Spulen (4) erzeugt und gesteuert oder geregelt werden kann,
**dadurch gekennzeichnet,**
**dass** entweder ein durch die teilweise Füllung mit dem magnetisierbaren Fluid (2) verbleibendes Innenvolumen des Behältnisses (1) mit einem flüssigen Medium aufgefüllt ist, das eine höhere Dichte als das magnetisierbare Fluid (2) aufweist und sich nicht mit dem magnetisierbaren Fluid (2) mischt, oder das Behältnis (1) so mit dem magnetisierbaren Fluid (2) gefüllt ist, dass mehrere voneinander getrennte Teilvolumina des magnetisierbaren Fluids (2) vorhanden sind.

2. Vorrichtung nach Anspruch 1,
**dadurch gekennzeichnet,**
**dass** sich das Behältnis (1) um einen zentralen Bereich der Vorrichtung erstreckt und die elektrischen Spulen (4) in dem zentralen Bereich angeordnet sind.

3. Vorrichtung nach Anspruch 1,
**dadurch gekennzeichnet,**
**dass** die elektrischen Spulen (4) um das Behältnis (1) herum angeordnet sind.

4. Vorrichtung nach Anspruch 2,
**dadurch gekennzeichnet,**
**dass** das Behältnis (1) einen geschlossenen Kanal um den zentralen Bereich bildet.

5. Vorrichtung nach Anspruch 4,
**dadurch gekennzeichnet,**
**dass** das Behältnis (1) ringförmig um den zentralen Bereich ausgebildet ist.

6. Vorrichtung nach einem der Ansprüche 1 bis 5, **dadurch gekennzeichnet,**
**dass** das flüssige Medium ein bei Raumtemperatur flüssiges metallisches Material mit einer Dichte von ≥ 6 g·cm⁻³ ist, insbesondere Quecksilber oder eine eutektische Legierung aus Gallium und Indium oder aus Gallium, Indium und Zinn.

7. Vorrichtung nach einem der Ansprüche 1 bis 6, **dadurch gekennzeichnet,**
**dass** die Steuereinrichtung so ausgebildet ist, dass sie einen phasenversetzten sinusförmigen Stromfluss durch die Spulen (4) erzeugen kann.

## Claims

1. A device for spacecraft attitude control, which
has a container (1) partially filled with a magnetizable fluid (2) and
a device for generating at least one rotating or wandering magnetic field, with which the magnetizable fluid (2) in the container (1) can be magnetized and made to continuously move on a closed orbit in an orbital plane by means of the rotation or movement of the at least one magnetic field,
wherein the device for generating at least one rotating or wandering magnetic field has several electric coils (4) for generating the magnetic field, whose coil axes lie in the orbital plane and each are aligned perpendicularly to a next section of the closed orbit, and
a controller, with which a phase-shifted current flow through the electric coils (4) can be generated and controlled or regulated,
**characterized in that**
either an interior volume of the container (1) remaining due to the only partial filling with the magnetizable fluid (2) is filled up with a liquid medium, which has a higher density than the magnetizable fluid (2), and does not mix with the magnetizable fluid (2), or the container (1) is filled with the magnetizable fluid (2) in such a way that several partial volumes of the magnetizable fluid (2) separated from each other are present.

2. The device according to claim 1,
**characterized in that**
the container (1) extends around a central area of the device and the electric coils (4) are arranged in the central area.

3. The device according to claim 1,
**characterized in that**
the electric coils (4) are arranged around the container (1) .

4. The device according to claim 2,
**characterized in that**
the container (1) forms a closed channel around the central area.

5. The device according to claim 4,
**characterized in that**
the container (1) is annularly formed around the central area.

6. The device according to one of claims 1 to 5, **characterized in that**
the liquid medium is a metallic material with a density of ≥ 6 g·cm⁻³ that is liquid at room temperature, in particular mercury or a eutectic alloy of gallium and indium or gallium, indium, and tin.

7. The device according to one of claims 1 to 6, **characterized in that**
the controller is designed in such a way that it can generate a phase-offset sinusoidal current flow through the coils (4).

## Revendications

1. Dispositif de réglage de position d'un engin spatial qui présente
- un récipient (1) partiellement rempli d'un fluide magnétisable (2) et
- un dispositif pour générer au moins un champ magnétique tournant ou défilant, via lequel le fluide magnétisable (2) dans le récipient (1) peut être magnétisé et mis en mouvement continu sur un trajet fermé dans un plan de trajet par la rotation ou le mouvement du au moins un champ magnétique,
dans lequel le dispositif pour générer un champ magnétique tournant ou défilant présente plusieurs bobines électriques (4) pour générer le champ magnétique, dont les axes de bobine se trouvent dans le plan du trajet et sont chacun alignés perpendiculairement à une section la plus proche du trajet fermé et
présente un dispositif de commande, via lequel un flux de courant déphasé peut être généré à travers les bobines électriques (4) et commandé ou régulé,
**caractérisé en ce que**
soit un volume interne du récipient (1) restant en raison du remplissage partiel avec le fluide magnétisable (2) est rempli d'un milieu liquide, qui présente une densité plus élevée que le fluide magnétisable (2) et ne se mélange pas avec le fluide magnétisable (2), soit le récipient (1) est rempli du fluide magnétisable (2) de telle sorte que plusieurs volumes partiels séparés du fluide magnétisable (2) soient présents.

2. Dispositif selon la revendication 1,
**caractérisé en ce que**
le récipient (1) s'étend autour d'une zone centrale du dispositif et les bobines électriques (4) sont disposées dans la zone centrale.

3. Dispositif selon la revendication 1,
**caractérisé en ce que**
les bobines électriques (4) sont disposées autour du récipient (1).

4. Dispositif selon la revendication 2,
**caractérisé en ce que**
le récipient (1) forme un canal fermé autour de la zone centrale.

5. Dispositif selon la revendication 4,
**caractérisé en ce que**
le récipient (1) est configuré en forme d'anneau autour de la zone centrale.

6. Dispositif selon une des revendications 1 à 5, **caractérisé en ce que**
le milieu liquide est un matériau métallique liquide à température ambiante et présentant une densité ≥ 6 g·cm⁻³, notamment du mercure ou un alliage eutectique de gallium et d'indium ou du gallium, de l'indium et de l'étain.

7. Dispositif selon une des revendications 1 à 6, **caractérisé en ce que**
le dispositif de commande est conçu de telle sorte qu'il puisse générer un flux de courant en forme de courbe sinusoïdale déphasée à travers les bobines (4).
